# EUROPEAN PATENT APPLICATION

(11) **EP 0 613 918 A1**
(43) Date of publication of application: **07.09.1994**
(21) Application number: 94200456.5
(22) Date of filing: 23.02.1994
(51) Int. Cl.: C08G 69/18

(54) **Lactam polymerization in the presence of cyclic polyisocyanate trimers**

(30) Priority: 01.03.1993 BE 9300187
(71) Applicant: DSM N.V., NL-6411 TE Heerlen (NL)
(72) Inventor: Mertens, Marcel Dion Marie, NL-6121 HX Born (NL); Kerssemakers, Arnoldus Maria, NL-6325 DB Valkenburg aan de Geul (NL)

(57) **Abstract**

A process for preparing polyamides involves the activated anionic polymerization of lactams in the presence of catalysts, activators, and, optionally, further copolymerizable components using cyclic trimers of polyisocyanates as activators. The advantage of such cyclic trimers of polyisocyanates is that they are liquid at room temperature, which makes it easy to meter them. In addition, these substances have a low vapour pressure, while they are good activators for the catalysts used in polyamide preparation.

## Description

### FIELD OF THE INVENTION

The present invention relates to a process for preparing polyamides by conducting the activated anionic polymerization of at least one lactam in the presence of catalysts, a cyclic trimer of polyisocyanate as an activator and, optionally, other copolymerizable components.

### BACKGROUND OF THE INVENTION

According to the patent literature, polyamides can be prepared by the anionically activated polymerization of lactams in the presence of catalysts and activators and, optionally, other copolymerizable components wherein biuret polyisocyanates based on non-aromatic diisocyanates in admixture with 0 to 70 parts by weight N-alkyl lactams (per 100 parts by weight biuret polyisocyanate), and having dynamic viscosities of at most 12,000 mPa.s are used as activators. Such a process is described in EP-B-167907.

The aforementioned process, however, suffers from a severely limiting environmental and health problem. Polyisocyanates that contain biuret groups and that are based on non-aromatic diisocyanates decompose into volatile isocyanates. The isocyanate decomposition products are toxic and pose undesired health and environmental risks. It would be a significant advance in the art to provide an anionically catalyzed polymerization process for lactams which avoids, or at least significantly reduces, release of toxic isocyanate decomposition products.

### SUMMARY AND OBJECTS OF THE INVENTION

The present inventors have discovered that the drawbacks characterizing the prior art process can be eliminated by using cyclic trimers of polyisocyanates as the activators in the polymerization of lactams to polyamides.

The present processes pertain to the activated anionic polymerization of lactams in the presence of at least one cyclic trimer of polyisocyanate as the activator. The method is conducted in the presence of catalysts, and, if desired, further copolymerizable components.

### DETAILED DESCRIPTION OF THE INVENTION

In general, in the present process, the activator consists essentially of cyclic trimers of polyisocyanates having at least two isocyanate groups and 4 to 25 carbon atoms. Among the cyclic trimers of aliphatic diisocyanates, diisocyanates such as 1,4-butane diisocyanate, 1,5-hexane diisocyanate and 1,6-hexane diisocyanate are preferred. Of these, the cyclic trimer of 1,6-hexane diisocyanate is a preferred activator. Cyclic trimers of aralphatic, cycloaliphatic and aromatic isocyanates can also be used and include, for instance, cyclic trimers of isophorone diisocyanate, 2,4- and 2,6-toluene diisocyanate, 2,2-, 2,4-and 4,4-diphenyl methane diisocyanate (MDI). Mixtures of polyisocyanates can be used.

Cyclic trimers can be obtained by trimerising some of the isocyanate group of a diisocyanate mixture consisting of aliphatic and cycloaliphatic diisocyanates in the presence of catalysts accelerating the trimerization of isocyanate groups, stopping the trimerization reaction when about 10 to about 60% of the isocyanate groups which were originally present are trimerized. The process can be catalyzed by, for instance, quaternary ammonium hydroxides. The catalyst present can be deactivated by heating the reaction mixture to a temperature above the decomposition temperature of the catalyst, or , for instance, by adding a catalyst poison to the reaction mixture, whereafter, if desired, the non-reacted excess isocyanate can be removed by known techniques such as, for instance, thin layer chromatography of particular, a mixture of hexamethylene diisocyanate and 1-isocyanato-3,3,5-trimethyl-5-isocyanato methyl-cyclohexane issued in a mole ratio of 4:1 to 1:4. Various suitable methods are known to those skilled in the art and include those described in EP-B-047452. Of these, the cyclic trimer of 1,6-hexane diisocyanate is a preferred activator. Cyclic trimers are liquid at room temperature and can therefore easily be metered, i.e. the amounts and rate of and rate of addition are easily controlled in the present process. Cyclic trimers have a very low vapour pressure. These cyclic trimers do not decompose to form volatile toxic isocyanates. The cyclic trimers are therefore good activators for the catalysts used in polyamide preparation.

The activator of the present invention does not contemplate the presence of an activator according to EP-B-167907.

The present process for preparing polyamides is carried out with an alkali lactamate or alkaline earth bislactamate, such as sodium lactamate, potassium lactamate or magnesium bislactamate, or a lactam magnesium halogenide as catalyst. Preferably, sodium lactamate is applied. The process according to the present invention is suitable in particular for the polymerization of lactams with at least five ring atoms, such as for example α-pyrrolidone, ε-caprolactam, C-substituted caprolactam, capryllactam, laurinolactam, or mixtures thereof. By preference, the lactam is caprolactam.

The process according to the present invention can be carried out by first dividing the lactam into at least two portions. The catalyst is dissolved in one portion of the lactam and the cyclic trimer of the polyisocyanate or the lactam-blocked cyclic trimer of the polyisocyanate is dissolved in the other portion of the lactam. By combining the two components the well-known cast nylon process can be used to obtain the polyamide. The activator is liquid at room temperature. As a consequence, it can be stored in a separate, unheated storage vessel and metered to the lactam stream containing the catalyst during the casting the step, resulting in polyamide formation.

The process according to the invention is also suitable for the preparation of nylon block copolymers via the RIM process (RIM = Reaction Injection Moulding). Nylon block copolymers mean polymers of the general formula:

(A - B)ₙ

where A represents a polyamide segment and B an elastomer segment.

In this process a polyol or an elastomer modified with hydroxyl groups is allowed to react with a lactam-blocked cyclic trimer of a polyisocyanate by adopting the process described in EP-A-135233 and in U.S. Patent No. 4,540,516, the complete disclosures of which are incorporated herein by reference. The resulting prepolymer can be converted into the nylon block copolymer with lactam and with the aid of the above-mentioned catalyst.

In the above-mentioned process, polyols having the following general formula:

R-(-OH)ₓ

Wherein the formula x represents a number that is greater than or equal to 2, preferably 2 to 4, can be usefully employed. The R group in the formula R-(-OH)ₓ can represent a hydrocarbon group (preferably having a molecular weight of at least 100), a polyether group, a polyester group or a polysiloxane group. Examples of hydrocarbon groups are alkylene groups, and include diols such as ethylene glycol or polymeric hydrocarbons such as segments of polybutadiene containing two or more hydroxyl groups.

Where reference is made to molecular weights of polymers or polymer segments in this framework, this is understood to mean the number-average molecular weight that can be determined by well-known techniques such as gel phase chromatography.

In the present context, polysiloxane groups or polysiloxane segments contain at least 50 wt.% of one or more units having the following formula: 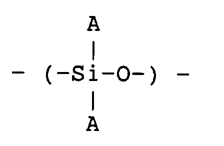
Polysiloxane groups or polysiloxane segments usually contain other groups as well, such as for example ether groups with lower alkyls such as ethane or methane. Such ether groups are often terminal groups on the chain of repeating siloxane units. These ether groups can represent up to 50 wt.% of the polysiloxane group, but preferably less than 30 wt.%, of the polysiloxane group.

Examples of compounds containing hydroxyl groups which can be used in the above-mentioned process are diols, triols and tetraols such as ethylene glycol, propylene glycol, poly(oxybutylene)glycol, poly(oxyethylene)glycol, poly(oxypropylene)diol, poly(oxypropylene)triol, poly(oxypropylene)tetrol, polybutadiene diol, polydimethyl siloxanes containing hydroxyl groups, and combinations thereof, for example block copolymers of poly(oxyethylene) and poly(oxypropylene) containing hydroxyl groups. However, a polyol obtained by ethoxylation and/or propoxylation of, for example, ethylene amine, glucose, fructose, saccharose and the like can be used. Polyester polyols, such as caprolactone diol, can be used.

The polyols described here are essentially polymeric polyols. The weight-average molecular weight of these polyols is at least about 500, and in general is in a range of between about 1000 and about 10,000, although molecular weights between about 2000 and about 8000 are preferred. The polyol provides an elastomeric segment in the polyamide ultimately prepared, while the lactam polymerization provides the hard crystalline segment in the polyamide.

It is also possible to use polyamines or mixtures of polyamines and polyols instead of polyols. The polyamines used in the process according to the invention are polyamines with at least two primary amine groups. By preference, the polyamine is selected from the group consisting of polyoxyalkylene polyamines, polyalkadiene polyamines, polyalkylene polyamines and mixtures thereof.

The polyamine has an average molecular weight of between about 300 and about 10,000, preferably between 1000 and 8000. The polyamine provides an elastomeric segment in the polyamide ultimately prepared, whereas the lactam polymerization provides the hard crystalline segment in the polyamide. Elastomeric segments contribute to a glass transition temperature Tg of lower than 0°C, preferably lower than -25°C, as soon as they have been incorporated in the nylon block copolymer. The glass transition temperature is determined by means of differential scanning calorimetry under nitrogen at scan rate of 10 to 20°C per minute. The amount of elastomeric segments in the nylon block copolymer according to the invention can vary between about 10 and about 90 wt.%, depending on the properties ultimately desired.

Suitable polymeric hydrocarbon polyamines include, among others, polybutadiene diamine, polybutadiene polyamines and butadiene-acrylonitrile polyamines. Suitable polyether polyamines include, among others, poly(oxybutylene) diamine, poly(oxyethylene) diamine, poly(oxypropylene) diamine, poly(oxypropylene) triamine, poly(oxypropylene) tetramine and combinations thereof such as, for example, block copolymers of poly(oxypropylene) and poly(oxyethylene) hanging at least two functional amine groups. The most preferred polyether polyamines are poly(oxypropylene) triamines having an average molecular weight of about 2000 to 7000.

In the preparation of the nylon or the nylon block copolymer it can be essential to conduct the polymerization in the presence of one or more compounds normally applied in nylon or nylon block copolymers, such as fillers, plasticizers, flame retardants, stabilizers and reinforcing fibres such as carbon fibres or glass fibres.

The present invention is described further in the following non-limiting examples.

### Example I

8.5 g of a 20% sodium caprolactamate solution in caprolactam and 106.75 g of caprolactam were introduced into an Erlenmeyer and heated to 135°C in an oil bath. In a second Erlenmeyer 2.2 g of a cyclic polyisocyanate trimer together with 106.75 g of caprolactam was likewise heated to 135°C. After these two solutions had been mixed, the reactive mixture formed was rapidly transferred to a platen press heated at 150°C. After 10 minutes the press was opened. In dry condition the molecular nylon 6 obtained had an E-modulus of 3200 MPa and an Izod notched impact value of 3.58 kJ/m².

### Example II

8.5 g of a 20% sodium caprolactam solution in caprolactam and 106.75 g of caprolactam were introduced into an Erlenmeyer and heated to 135°C in an oil bath. In a second Erlenmeyer 3.15 g of a 70% solution of cyclic polyisocyanate trimer n-methyl pyrrolidone together with 106.75 g of caprolactam was also heated to 135°C. After mixing of the two solutions the mixture was rapidly cast into a platen press heated at 150°C. After 10 minutes the press was opened. In dry condition the product obtained had an E-modulus of 3145 MPa and an Izod notched impact value of 3.45 kJ/m².

## Claims

1. A process for preparing polyamides which comprises conducting the activated anionic polymerization of at least one lactam in the presence of a catalyst, an activator which consists essentially of at least one cyclic trimer of a polyisocyanate, and, optionally, further copolymerizable components.

2. A process according to claim 1, wherein the activator is a cyclic trimer of 1,6-hexane diisocyanate.

3. A process according to claim 1, wherein the catalyst comprises an alkali-metal lactamate.

4. A process according to claim 3 wherein the catalyst is sodium lactamate.

5. A process according to claim 1, wherein the lactam is caprolactam.

6. An article obtained by the process according to the process of any one of the preceding claims.
